# EUROPEAN PATENT APPLICATION

(11) **EP 2 881 363 A1**
(43) Date of publication of application: **10.06.2015**
(21) Application number: 13195403.4
(22) Date of filing: 03.12.2013
(51) Int. Cl.: C01B 13/02, A62B 7/08, A62B 21/00

(54) **Chemical oxygen generator with compact design**

(71) Applicant: Zodiac Aerotechnics, 78370 Plaisir (FR)
(72) Inventor: Boomgaarden, Günter, 23684 Scharbeutz (DE); Rittner, Wolfgang, 23623 Ahrensbök (DE); Niedostatek, Mark, 21279 Wenzendorf (DE); Meckes, Rüdiger, 23919 Berkenthin (DE)
(74) Representative: Eisenführ Speiser

(57) **Abstract**

The invention relates to a chemical oxygen generator (1, 310) for an emergency oxygen supply device in an aircraft. The generator comprising a housing (2), a solid chemical substance (8) comprising oxygen in chemically bound form arranged inside said housing (2), a starter unit (42) positioned adjacent to said solid chemical substance (8), said starter unit (42) being adapted to provide energy to said solid chemical substance (8) for initiating a chemical reaction of said solid chemical substance (8) producing gaseous oxygen, and an outflow port (24, 124, 224, 330) in said housing (2) being in fluid communication with said solid chemical substance (8). According to the invention the solid chemical substance (8) comprises a recess (40) and said starter unit (42) is arranged at least partially inside said recess (40). The invention further relates to an emergency oxygen supply device in an aircraft.

## Description

The invention relates to a chemical oxygen generator for an emergency oxygen supply device in an aircraft, said generator comprising a housing, a solid chemical substance comprising oxygen in chemically bound formed arranged inside said housing, a starter unit positioned adjacent to said chemical substance, said starter unit being adapted to provide energy to said chemical substance for initiating a chemical reaction of said solid chemical substance producing gaseous oxygen, an outflow port in said housing being in fluid communication with said chemical substance. Further, the invention relates to an emergency oxygen supply device in an aircraft, said device comprising a plurality of chemical oxygen generators as mentioned above.

Such chemical oxygen generators are used to provide oxygen to passengers of an aircraft in an emergency situation like a decompression situation. The chemical oxygen generators are usually stored in a ceiling compartment above the passenger. In case of an emergency situation the chemical oxygen generator is activated by a starter unit which is coupled to a control unit detecting such emergency situation. The starter unit ignites the chemical substance like sodium chlorate inside the chemical oxygen generator thus starting the chemical reaction of the sodium chlorate to gaseous oxygen and remainders.

A problem associated with the use of such chemical oxygen generators is on the one hand the start-up or ignition period. An emergency situation often requires immediate supply of oxygen to the passengers since a rapid decompression may hinder the passenger from further breathing cabin air with sufficient oxygen content. The passenger may thus wish to immediately activate the chemical oxygen generator by pulling the mask towards himself and thus effecting the starting ignition. The chemical reaction in the chemical oxygen generator which is started in response to the ignition in common chemical oxygen generators is normally characterized by its slow start of the chemical reaction producing only little oxygen in the start-up period.

It is generally known to improve the start-up by an improved ignition process or an accelerated chemical reaction by specific ignitions of the chemical substance. Whereas this may improved the start of supply of oxygen a general drawback of such measures is the reduced supply time due to the enhanced chemical reaction. Therefore known chemical oxygen generators may comprise additionally to the reaction promoters reaction delay substances to slow down the chemical reaction after the start-up period.

Usually, a civil aircraft flying in high altitude and experiencing a decompression situation will immediately conduct a descent to a lower altitude and then travel at this lower altitude to the next airport. Following such altitude profile in the emergency situation immediate supply of large amounts of oxygen is required right after the emergency situation has occurred in the high altitude flight level. This supply shall be maintained until the aircraft has reached the lower altitude or may even be decreased during descent of the aircraft. When having reached the low altitude the oxygen supply may be reduced to a lower amount to allow a long supply time of the oxygen during flight. It is known to provide control units controlling a control valve unit to adapt the amount of oxygen delivered to the passenger to such an altitude profile or the altitude flight level. However, such control valves have the significant draw back of inducing high pressure in the chemical oxygen generator which vice versa has an influence on the chemical reaction. In particular, a high pressure in the chemical oxygen generator may decrease the chemical reaction to an inacceptable chemical reaction rate and may in particular be critical if the terrestrial ground profile requires to return to a higher flight level during travelling to the next airport, e.g. due to a mountain range to be passed by the aircraft.

It is known to vary geometrical properties of the solid chemical substance to achieve a slower reaction after the initial start-up period For example it is known to use substantially cylindrical shaped solid chemical substances, also known as "calls" which have a specific axial length to provide a sufficient long reaction time.

A drawback of these chemical oxygen generators within an increased reaction time based on the geometrical properties, i.e. the length of the solid chemical substance is on the one hand the space consuming layout which can lead to problems when using the chemical oxygen generator in an emergency oxygen device in an aircraft and on the other hand the increased weight of such chemical oxygen generators due to the specific housing properties. Common chemical oxygen generators need to be very long to provide the required oxygen supply time period.

Therefore it is an object of the invention to provide a chemical oxygen generator and an emergency oxygen device which better fulfils the requirements regarding mounting space and weight and preferably better fulfils the requirements of oxygen supply in emergency situation than prior art systems. It is a particular object of the invention to achieve the above object without using additional chemical substances as e.g. reaction promoters or reaction delay substances.

According to the invention this object is achieved by a chemical oxygen generator as described in the introductory portion beforehand, wherein the solid chemical substance comprises a recess and said starter unit is arranged at least partially inside said recess.

According to the invention an important factor influencing the speed of the chemical reaction is the design of the solid chemical substance inside the housing of the chemical oxygen generator and the placement of the starter unit. Due to the fact that the solid chemical substance comprises a recess and the starter unit is arranged at least partially inside the recess the outer size or outer dimensions of the chemical oxygen generator is reduced. Further the starter unit and thus the ignition point of the reaction is placed not on an outer surface of the solid chemical substance but partially arranged inside due to the recess at the solid chemical substance. Thus the chemical reaction in the ignition period can travel or burn in multiple directions seen from the recess which leads to an increased oxygen generation in the ignition period. In use, the solid chemical substance will react from beginning at the starter unit to an end which usually is opposed to said starter unit. The travel path between this beginning at the starter unit and the end may be defined as a chemical reaction path. According to the present invention, when the ignition starts at the bottom portion of the recess the reaction front spreads radial around the recess and axial away from the recess on its reaction path. Additionally the reaction front travels or burns "backwards" in an axial direction towards an open portion of the recess thus into the direction of the surface of the solid chemical substance.

Preferably the contour length to surface ratio of a cross section of said solid chemical substance is substantially constant with entire length. Preferably the solid chemical substance is formed as a solid core without internal cavities or through bores beside the recess. Preferably the generator comprises holding means for fixing said solid chemical substance inside the housing. Preferably these holding means leave a free circumferential space for the gas to flow from a generation point, hence from the reaction front, to the outflow port. For example the holding means are formed as two holding plates holding two ends of the solid chemical substance and each positioned adjacent to each end of the housing. Preferably at least the portion of the solid chemical substance arranged between the holding means comprises a contour length to surface ratio of the cross-section which is substantially constant over the length between the two holding means.

Further preferably the starter unit comprises a housing. The housing preferably has a substantially cylindrical shape. Generally, the position of the starter unit is not to be interpreted to define the position of a component which fulfils the starting function and thus should not be understood to delimit the invention to an oxygen generator having such a component in such a particular position. Instead, the term starter unit shall be understood to define the particular element which initiates the start, like e.g. the spark igniting the chemical substance. The starter unit may be positioned by providing a starter component and the particular position of the housing. For example the starter unit may be of mechanical or electrical type.

According the first preferred embodiment the solid chemical substance has a generally cylindrical form and the recess is formed in an axial end face of the solid chemical substance. Thus, when the solid chemical substance has a substantial cylindrical shape, which in general is known, it comprises two opposing axial end faces. The recess is formed in one of the end faces, e.g. the first end face. Thus the reaction path would run from the bottom of the recess in axial direction to the second end face and from the bottom of the recess in opposite direction to the first end face. Therefore after ignition of the chemical reaction the reaction front travels into two directions, namely into the direction of the second end face and into the direction of the first end face. As long as the reaction front travels in two directions, the oxygen generation is increased. Therefore the time frame for the start-up period where the increased oxygen supply is demanded can be determined by the length of the reaction path from the bottom of the recess to the first end face. After the reaction has terminated at the first end face, the reaction front still travels along the second reaction path to the second end face and oxygen is produced, however at a lower generation rate. This second reaction period, where only one reaction front is travelling or burning, can be used to supply oxygen to a passenger in the long-term period until the aircraft is again in a save region where less oxygen required.

It is further preferred that said recess is a bore, in particular a cylindrical bore, and the starter unit is at least partially arranged inside said bore. It is preferred that the starter unit is substantially surrounded or enclosed by the solid chemical substance to provide an effective usage of the space inside the housing. Depending on the duration of the start-up period and the dimension of the starting unit, it is preferred that at least half of the starter unit, measured from an axial length of the starter unit is arranged in the bore. Preferably 0,75 of the axial length of the starter unit is arranged in the bore. In one embodiment the starter unit is completely arranged inside the bore. However, it should be understood that additional elements connected with the starter unit may protrude out of bore, e.g. parts of a casing of the starter unit or wiring for supplying the starter unit with electrical energy or other activation means. It is mainly a question where the actual ignition point is located, i.e. where the reaction is started, inside the solid chemical substance.

According to a further preferred embodiment the starter unit is releasably mounted to the housing of the generator. Preferably the housing comprises a through bore having first mounting elements and the starter unit comprises second mounting elements so that the starter unit may be mounted from outside the housing to the through bore and extending into said recess of the solid chemical substance. In a particular preferred embodiment the first and second mounting means comprise threaded fasteners or clip fasteners. Preferably the through bore or the housing comprises an inner thread and the starter unit or the housing of the starter unit comprises an outer thread for engagement with the inner thread of the through bore of the housing. Thus, the starter unit is screwable to the housing by means of screwing the starter unit to the housing the starter unit comes into engagement with the recess of the solid chemical substance and therefore in an arrangement where the chemical reaction can be started. According to this embodiment the starter unit is detachable or demountable from the chemical oxygen generator. Thus, when storing and transporting the chemical oxygen generator the starter unit can in a simple way be detached from the chemical oxygen generator. Therefore the chemical oxygen generator without the starter unit can be stored and transported in a common way and do not anymore underfall the rules for the transport of dangerous goods, for example as they are in force for the EU inland. Right before installing the chemical oxygen generators to the aircraft, the starter unit may be mounted, preferably by screwing or clipsing, to the chemical oxygen generator which afterwards would be ready to use. Thus, the transport and storage of the chemical oxygen generator according to this embodiment is less costly and the safety of the chemical oxygen generator is also increased.

Further it is preferred that ignition powder is arranged in a bottom portion of said recess for interaction with the starter unit. Preferably the ignition powder is in a compact form and fixed the bottom portion of the recess so that when demounting the starter unit from the chemical oxygen generator the ignition powder remains in the recess. Ignition powder in the present case should be understood as including any kind of chemical substances usable to start the chemical reaction of the solid chemical substance on interaction with the starter unit. According to this embodiment the safety is further increased since only the ignition powder in combination with the starter unit is able to start the chemical reaction.

According to another preferred embodiment said outflow port is arranged at a circumferential face of said housing. The housing preferably comprises a substantially cylindrical shape with two axial end faces, which can be planar or of a different shape, such as curved e.g. in a convex manner. Preferably the outflow port is arranged at an intermediate position between first and second end faces of the solid chemical substance. Thus the outflow port is not arranged at an opposite end of the starter unit at a, e.g. second end face of the solid chemical substance, but as seen from the reaction path of a substantially cylindrical solid chemical substance at an intermediate position. Therefore the reaction path running from the bottom of the recess to the opposed end of the solid chemical substance (as seen from the recess) the reaction path can be divided into two sub paths. First, the reaction front travels from the recess into the direction of the second end face, thus away from the starter unit. Gaseous oxygen is generated flowing in a space between the solid chemical substance and the housing of the chemical oxygen generator to the outflow port. Thus, the gaseous oxygen, which has a high temperature due to the chemical reaction process, flows along a outer surface of the solid chemical substance until it reaches the outflow port, thus heating up the solid chemical substance. The temperature of the solid chemical substance influences the reaction speed in that a higher temperature of the solid chemical substance leads to a higher reaction speed and a lower temperature of the solid chemical substance leads to a lower reaction speed. When the reaction front passes the outflow port and generated gaseous oxygen in the following flows backwards and flows along the already burned solid chemical substance, the rest of the unused or unreacted solid chemical substance is not anymore heated up by the gaseous oxygen. Thus, from the point on where the reaction front passes the outflow port, the reaction speed is slowed down leading to a prolonged generation period of oxygen. Additionally, when the outflow port is not arranged at the end face of the housing of the chemical oxygen generator, the overall length of the housing is decreased, thus leading to a compact and less space consuming design of the chemical oxygen generator.

According to a further preferred embodiment the chemical oxygen generator comprises an external filter assembly in fluid communication with said outflow port for filtering the generated oxygen. These features further serve as another aspect of the invention solving the objective of the invention with a chemical oxygen generator as described in the introductory portion above. Therefore the problem is also solved by a chemical oxygen generator comprising a housing, a solid chemical substance comprising oxygen in a chemically bound form arranged inside said housing, a starter unit positioned adjacent to said chemical substance, said starter unit being adapted to provide energy to said chemical substance for initiating a chemical reaction of said solid chemical substance producing gaseous oxygen, an outflow port in said housing being in fluid communication with said chemical substance, wherein an external filter assembly is provided in fluid communication with said outflow port for filtering the gaseous oxygen. In common chemical oxygen generators known from the state of the art, filters are included inside the housing for filtering the generated oxygen. The filters are adapted to filter CO, CO₂, chlorine and dust as well as other hazardous substances out of the generated gaseous oxygen flow. Arranging the filter assembly external to the housing of the chemical oxygen generator, the housing may be formed with smaller dimensions thus leading to a more effective space consumption. Additionally when the filter assembly is separated from the solid chemical substance, the filter itself and also the housing of the filter assembly can be made of a temperature sensible material, such as plastics. There is no need to form the filter material itself and the housing of the filter assembly out of a temperature resistant material. This also leads to a more cost efficient chemical oxygen generator. Additionally the filter assembly can be arranged distal to the chemical oxygen generator itself increasing the possibility of design and arrangement in the aircraft. Also it is possible to use one filter assembly for a plurality of chemical oxygen generators.

Preferably the filter assembly has a substantial longitudinal shape and is arrange adjacent to the housing of the generator. Preferably the longitudinal shaped filter assembly is arranged substantially parallel to the housing of the generator. This leads to more space efficient arrangement. Preferably the filter assembly itself comprises an outlet which is connectable to e.g. a manifold to which oxygen masks are connected. By this arrangement of the filter assembly it is also possible to arrange the outlet of the filter adjacent to the starting unit whereby both connections to the environment of the chemical oxygen generator are arranged closed to each other.

According to a further preferred embodiment the solid chemical substance consists of sodium chloride. That means there are no other chemical substances as e.g. reaction actuators, reaction promoters, inert material as for example glimmer, reaction delay substances, etc. Therefore the production of the solid chemical substance becomes easier and further there are less hazardous gases produced when generating the oxygen by means of the chemical reaction. This becomes possible due to the fact that the different reaction periods, namely the start-up period and the long-term period, are defined by the placement of the starter unit in the recess of the solid chemical substance and in particular the placement of the outflow port of the housing.

It is further preferred that the generator comprises a safety valve arranged at the housing. The safety valve is adapted to open when an overpressure inside the housing occurs. The safety valve prevents the housing from breaking on the event of an overpressure inside the housing. Therefore the safety is increased.

According a further aspect of the invention an emergency oxygen supply device in an aircraft is provided said device comprising a plurality of chemical oxygen generators which are formed according to a at least one of the preceding described preferred embodiment of a chemical oxygen generator, wherein further a control unit coupled to the starter units of the generators is provided, wherein further said control unit is adapted to simultaneously activate at least two starter units. According to this aspect, the oxygen is supplied to one single oxygen mask out of two or more chemical oxygen generators simultaneously. According to his embodiment it is not one single large chemical oxygen generator which is used to supply oxygen to one single passenger or a group of passengers but instead a plurality of small oxygen generators like e.g. two, three or four chemical oxygen generators is used for such supply to a single passenger or a group of passengers. It is to be understood that the single passenger or each passenger out of the group of passengers is supplied out of all simultaneously ignited chemical oxygen generators in this embodiment simultaneously. This aspect of the invention is based on the inventor recognizing that start-up of a plurality of small chemical oxygen generators will result in an initially higher delivery rate of oxygen when compared to start up of one single large chemical oxygen generator having the same amount of solid chemical substance like the four small chemical oxygen generators in sum. Thus, the initial delivery rate can be improved significantly without providing a larger amount of the solid chemical substance here.

It is particularly preferred that said control unit is adapted to control the starter units according to any of the following schemes: simultaneously activating all starter units, simultaneously activating a first subset of the plurality of starter units and subsequently activating the starter units of a second subset one after the other, wherein the first subset comprises at least two starter units simultaneously activating a first subset of the plurality of starter units and subsequently simultaneously activating a second subset of the plurality of starter units and subsequently activating the starter units of a third subset one after the other, wherein the first subset and the second subset each comprises at least two starter units. According to this invention, the advantage of starting the chemical reaction in two or more chemical oxygen generators simultaneously at the beginning of the oxygen supply right after occurrence of the emergency situation it combined with a subsequent start-up of the chemical reaction in further chemical oxygen generators to elongate the delivery time of oxygen out of the emergency oxygen device. It is to be understood that in these subsequent start-ups of the chemical reaction a single or a plurality of oxygen generators may be ignited simultaneously to maintain a certain delivery rate and that the selection of the number of oxygen generators to be ignited may depend on the flight altitude level or the oxygen consumption of the passenger which may be measured by respective sensors and input in a control unit controlling the ignition of the chemical oxygen generators.

Whereas different aspects and embodiments have been described beforehand it is to be understood that the different aspects and characteristics of these embodiments may be combined with each other to reach a design and control mechanism of an emergency oxygen device which is in particular helpful to provide a delivery rate of oxygen adapted to a rapid start-up and a long-term delivery rate of oxygen during the flight after occurrence of an emergency situation.

Preferred embodiments of the invention are described in detail below with reference to the figures.
- Figure 1: shows a cross-sectional view of a chemical oxygen generator according to a first embodiment;
- Figure 2: shows a cross-sectional view of a chemical oxygen generator according to a second embodiment;
- Figure 3: shows a cross-sectional view of a chemical oxygen generator according to a third embodiment; and
- Figure 4: shows a schematically setup of an embodiment of an emergency oxygen supply device according to the invention.

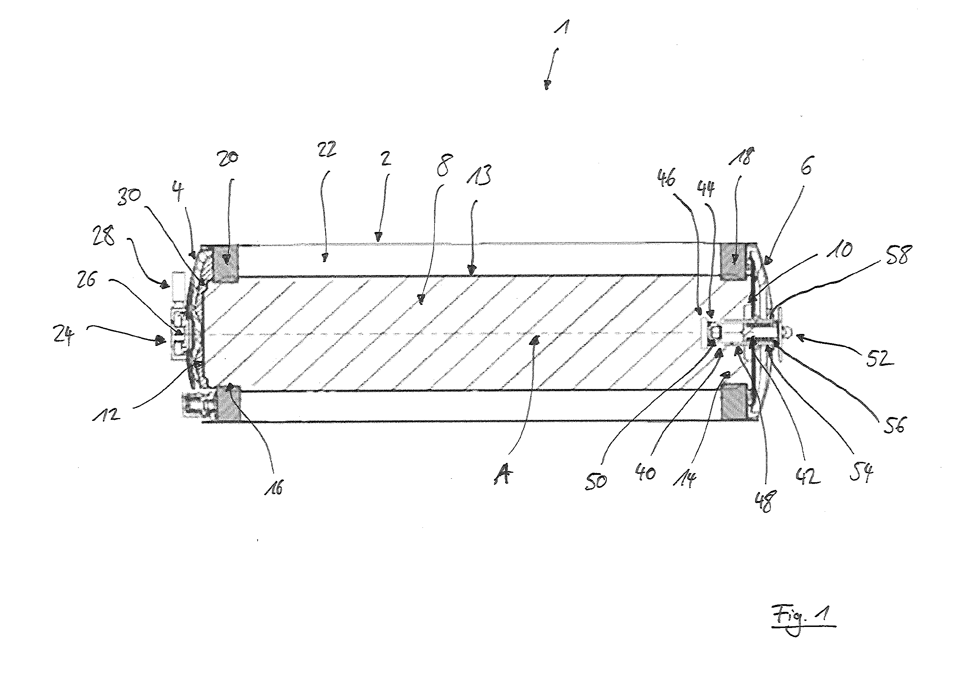

Referring to figure 1, a chemical oxygen generator 1 comprises a housing 2, which extends in a longitudinal direction along a longitudinal axis A. The housing 2 is according to this embodiment of a generally cylindrical shape with convex end plates 4, 6 as shown in figure 1. Inside the housing 2 a solid chemical substance 8 in form of a core is arranged. The solid chemical substance 8 comprises a generally cylindrical shape. The solid chemical substance 8 has a first end face 10 and a second end face 12. Adjacent to the end faces 10, 12 a holding portion 14, 16 of the solid chemical substance 8 is received in holding means 18, 20. The holding means 18, 20 according to this embodiment are formed as holding plates which are fixed at an inside portion of the housing 2. Between the inner surface of the housing 2 and the outer surface of the solid chemical substance 8 a circumferential free space 22 is provided through which gaseous oxygen can flow to the outflow port 24. The outflow port 24 according to this embodiment is provided with an outflow valve 26 having a connector 28 for connecting the chemical oxygen generator 1 to a manifold or an oxygen mask. Between the outflow port 24 and the circumferential free space 22 inside the housing 2 a filter member 30 is provided adjacent to the outflow port 24. The filter member 30 filters the generated gas.

A recess 40 is provided in the solid chemical substance 8 at the first end face 10. The recess 40 according to this embodiment is formed as a cylindrical bore which is arranged substantially coaxial with the longitudinal axis A of the solid chemical substance 8. A starter unit 42 is arranged inside the recess 40. At a bottom portion 44 of the recess 40 ignition powder 46 is provided. The starter unit 42 comprises a housing 48 and has a starting point 50 where a spark for igniting the ignition powder 46 is generated. At the opposite the starter unit 42 comprises a connector 52 for connecting the starter unit 42 to e.g. a controller (not shown in figure 1) or a pulling cord (not shown in figure 1).

In the end cap 6 the housing 2 comprises a through bore 54 through which the starter unit 42 extends. The starter unit 42 is accessible from outside the housing 2 and extends into the recess 40 of the solid chemical substance 8. At the through bore 54 in the end cap 6 first mounting means 56 in form of an inner thread are provided. The housing 48 of the starter unit 42 comprises second mounting means 58 in form of an outer thread. By means of the first mounting means 56 and the second mounting means 58 the starter unit 42 is mountable and demountable to the chemical oxygen generator 1. According to this embodiment (figure 1) the starter unit 42 can be screwed to the housing 2 of the chemical oxygen generator 1.

The reaction paths corresponding to a start-up period and a long-term period according to the first embodiment (figure 1) would be as follows: When the starter unit 42 starts the chemical reaction a spark is generated at the starter point 50. The spark interacts with the ignition powder 46 provided at the bottom 44 of the recess 40. Subsequently the chemical reaction of the solid chemical substance 8 starts and the reaction front travels along the reaction paths. A first reaction path runs substantially along the axis A from the bottom portion 44 of the recess 40 towards the second end face 12 of the solid chemical substance. Additionally the reaction front will travel in a radial direction from the bottom portion 44 of the recess towards the radial outer surface 13 of the solid chemical substance 8. Due to the fact that the starter unit 42 is arranged inside the recess 40 a second reaction path, which runs in an opposite direction of the first reaction path is provided. The second reaction path runs substantially along the axis A from the bottom 44 of the recess 40 towards the first end face 10. Thus in the startup period of the chemical reaction the reaction front travels in multiple directions thus generating an increased amount of oxygen.

When the solid chemical substance 8 in the head portion, i.e. the portion of the solid chemical substance 8 between the bottom 44 of the recess 40 and the first end face 10 is burned and has readily reacted, the start-up period is finished. After this point of time only the first reaction path running from the bottom 44 of the recess 40 to the second end face 12 is active and a lower amount of oxygen compared to the start-up period is produced. The second period is referred as to the long-term period. In the start-up period the increased amount of oxygen is supplied to a passenger in response to an urgent cabin decompression. When the aircraft starts to sink into lower regions less oxygen supply is required however for a longer period until the aircraft is again in a safe region or landed on ground. During the second, long-term period, the lower oxygen demand can be generated by only one reaction front travelling along the first reaction path from the bottom 44 of the recess 40 to the second end face 12.

As readily can be seen from figure 1, the solid chemical substance 8 is formed as a solid cylindrical core without any cavities, through bores or the like beside the recess 40.

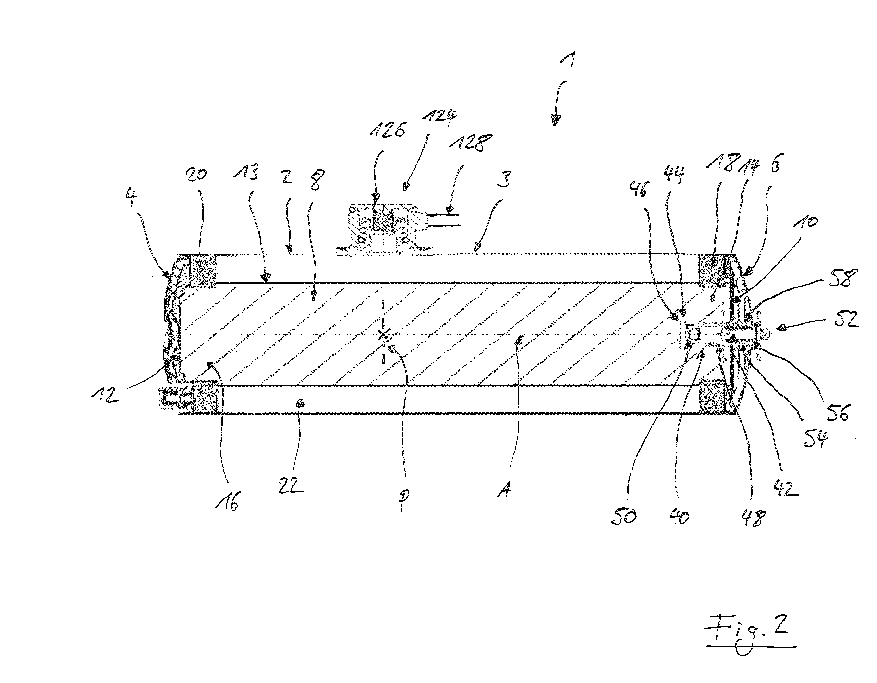

Referring now to figure 2 a preferred cross-sectional design of a chemical oxygen generator 1 according to a second embodiment is shown. Like and identical parts are depicted with identical reference signs. Insofar reference is made to the above description of the first embodiment with respect to figure 1.

The main difference between the second embodiment and the first embodiment is that the outflow port 124 of the second embodiment (figure 2) is arranged at an outer circumferential portion 3 of the housing 2. The outflow port 124 is provided with an outflow valve 126 which comprises a connector 128 for connecting the chemical oxygen generator 1 according to the second embodiment to a manifold or an oxygen mask for a passenger. Due to the placement of the outflow port 124 a circumferential portion 3 of the housing 2 and not at an end cap 4, 6, the overall length of the chemical oxygen generator 1 is reduced compared to the first embodiment (figure 1). Additionally the placement of the outflow port 124 has implications on the reaction paths and operating periods.

According to the second embodiment (figure 2) the start-up period is identical to the first embodiment and insofar reference is made to the description of the first embodiment. However the long-term period is split up in a first long-term period and a second long-term period with further reduced oxygen generation. The reaction path corresponding to the first long-term period runs from approximately the bottom portion 44 of the recess 40 to the intersection point P substantially along the longitudinal axis A. The reaction path corresponding to the second long-term period is defined by the path running from the intersection point P to the second end face 12 of the solid chemical substance 8. Due to the effect that the outflow port 124 is arranged at an intermediate position at the circumferential outer portion 3 of the housing 2 and not at an end cap 4, 6, any gaseous oxygen which is produced in the chemical reaction has to flow through the space 12 into the direction of the outflow port 124. Thus the flow path of the gaseous oxygen is in opposite direction to the direction of the chemical reaction when the reaction front is between the intersection point P and the second end face 12. In contrast, the flow path of the gaseous oxygen is in the same direction like the travel path of the chemical reaction front, when the front is between the bottom portion 44 of the recess 40 and the intersection point P. When the flow part of the gaseous oxygen is in the same direction like the travel path of the chemical reaction from a precede heating of the solid chemical substance is effected by the hot generated oxygen gas streaming along the surface 13 of the solid chemical substance. This preheating tolerates the chemical reaction in this section. In contrast when the reaction front of between the intersection point P and the second end face 12, the flow part of the gaseous oxygen is in opposite direction to the direction of the chemical reaction front and therefore no preheating is effected which effects a further degeneration of the speed of the chemical reaction in this section. As a consequence of this preheating and non-preheating the volume portion of the solid chemical substance between the bottom portion 44 of the recess 40 and the intersection point P will react quickly and produce a high delivery rate of oxygen whereas the second volume section of the solid chemical substance 8 between the intersection point P and the second end face 12 will react slowly and produce long delivery time of oxygen. This perfectly fits to the flight attitude profile of an aircraft after a decompression situation has occurred in high attitude.

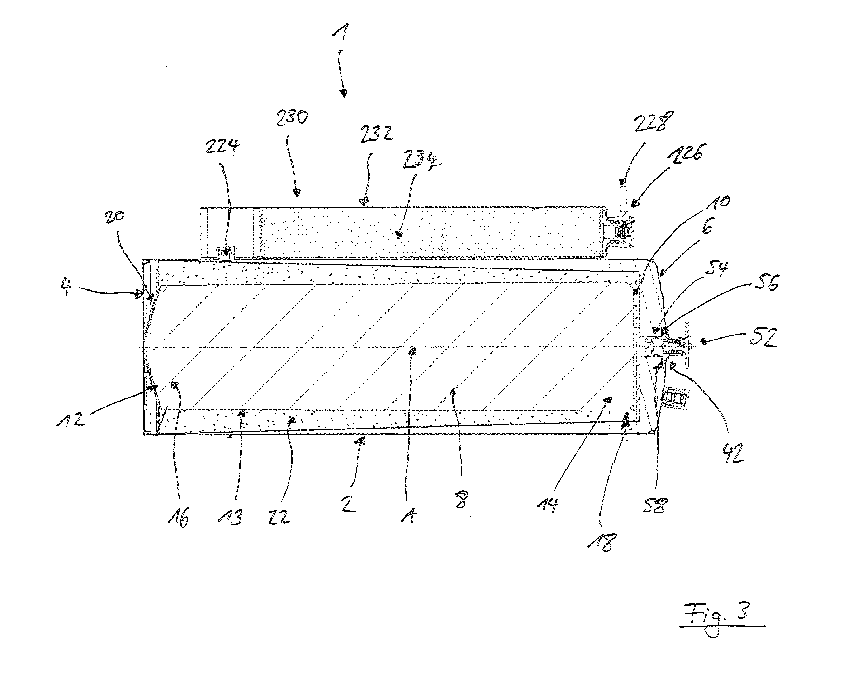

Referring now to figure 3, a third embodiment of the chemical oxygen generator 1 is shown in a cross-sectional view. Like and identical parts are depicted with identical reference signs. Insofar reference is made to the above description of the first and second embodiments (figures 1 and 2). The main difference of this third embodiment lays in the fact that an external filter assembly 230 is provided. The chemical oxygen generator 1 according to this third embodiment as well as the first and second embodiments of the chemical oxygen generator 1 comprises a housing 2 with first and second end caps 4, 6. A solid chemical substance 8 in form of a cylindrical core is provided inside the housing 2.

In contrast to the first and second embodiments the solid chemical substance 8 according to this third embodiment (figure 3) does not comprise a recess. Much more the first end face 10 is plane and received in holding means 18. However in accordance with the first two embodiments a starter unit 42 is provided, which is mounted by means of first and second mounting means 56, 58 to a through bore 54 in the first end cap 6 of the housing 2. The circumferential free space 22 between the housing 2 and the solid chemical substance 8 according to this embodiment is filled with an insulating material which is gas permeable.

The housing 2 comprises an outflow port 224 which in accordance with the second embodiment (figure 2) is arranged at a circumferential outer portion of the housing 2. In contrast to the first embodiment (figure 1) the chemical oxygen generator 1 according to the third embodiment (figure 3) does not comprise a filter material 30 adjacent to the second end cap 4. Thus the overall longitudinal length in direction of the longitudinal axis A is reduced.

At an outer portion of the housing 2 and in fluid communication with the outflow port 224 the filter assembly 230 is arranged. The filter assembly 230 comprises a substantially cylindrical housing 232 which has an outflow valve 226 with a connector 228. Filter material 234 is provided inside the housing 232 of the filter assembly 230. Due to the fact that the filter material 234 is not arranged inside the housing 2 of the chemical oxygen generator 1 but in an external assembly 230 there is no need to use temperature resistant filter material, since the generated oxygen flowing through the filter assembly 230 already has cooled down to a certain degree. Therefore also the housing 232 of the filter assembly 230 may be formed of a temperature sensitive material as in the present case a thermoplastic material.

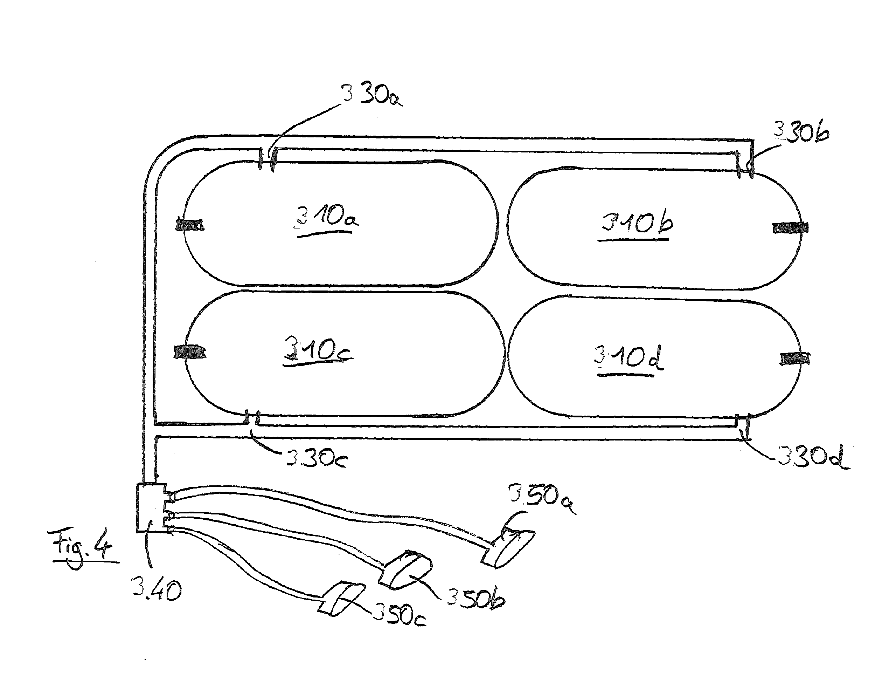

Referring now to figure 4, a set-up of four chemical oxygen generators 310 a, b, c, d is shown. The outflow ports 330 a, b, c, d of these four chemical oxygen generators are connected via oxygen flow lines to a central manifold 340. Said central manifold provides the oxygen flowing out of the oxygen generators 350 a-e to three oxygen masks 350 a-c wherein it is to be understood that each of the oxygen masks 390 a-c is supplied from all four chemical oxygen generators 310 a-d.

According to this embodiment, a control unit (not shown) is provided which simultaneously activates the chemical oxygen generators 310 a, b and c. In this initial start-up the chemical reaction inside these three chemical oxygen generators will quickly develop and provide a high initial delivery rate of oxygen for a start-up time. The control unit is further adapted to ignite the fourth chemical oxygen generator 310 d after a predetermined time to supply oxygen at a low delivery rate for elongating the total delivery rate of oxygen after an emergency situation has occurred.

## Claims

1. Chemical oxygen generator (1, 310) for an emergency oxygen supply device in an aircraft, said generator comprising:
- a housing (2),
- a solid chemical substance (8) comprising oxygen in chemically bound form arranged inside said housing (2),
- a starter unit (42) positioned adjacent to said solid chemical substance (8), said starter unit (42) being adapted to provide energy to said solid chemical substance (8) for initiating a chemical reaction of said solid chemical substance (8) producing gaseous oxygen,
- an outflow port (24, 124, 224, 330) in said housing (2) being in fluid communication with said solid chemical substance (8),
**characterized in that** the solid chemical substance (8) comprises a recess (40) and said starter unit (42) being arranged at least partially inside said recess (40).

2. Generator according to claim 1, wherein the solid chemical substance (8) has a generally cylindrical form and the recess (40) is formed in an axial end face (10) of the solid chemical substance (8).

3. Generator according to claim 1 or 2, wherein said recess (40) is a bore, in particular a cylindrical bore, and the starter unit (42) is at least partially arranged inside said bore.

4. Generator according to any of the preceding claims, wherein said starter unit (42) is releasably mounted to the housing (2).

5. Generator according to claim 4, wherein the housing (2) comprises a through bore (54) having first mounting elements (56) and the starter unit (42) comprises second mounting elements (58), so that the starter unit (42) may be mounted from outside the housing (2) to the through bore (54) and extending into said recess (40) of said solid chemical substance (8).

6. Generator according to claim 5, wherein the first and second mounting means (56, 58) comprise threaded fasteners or clip fasteners.

7. Generator according to one of the preceding claims, wherein ignition powder (46) is arranged at a bottom portion (44) of said recess (40) for interaction with the starter unit (42).

8. Generator according to one of the preceding claims, wherein said outflow port (24, 124, 224, 330) is arranged at a circumferential face (3) of said housing (2).

9. Generator according to claim 7, wherein the outflow port (24, 124, 224, 330) is arranged at an intermediate position (P) between first and second end faces (10, 12) of the solid chemical substance (8).

10. Generator according to the preamble of claim 1 or to any of the preceding claims, further comprising an external filter assembly (230) in fluid communication with said outflow port (24, 124, 224, 330) for filtering the generated oxygen.

11. Generator according to claim 10, wherein said filter assembly (230) has a substantial longitudinal shape and is arranged adjacent to the housing (2) of the generator.

12. Generator according to claims 10 or 11, wherein said filter assembly (230) comprises a housing (232) comprising or consisting of a plastic material.

13. Generator according to any of the preceding claims, wherein the solid chemical substance (8) consists of sodium chlorate.

14. Generator according to any of the preceding claims, further comprising holding means (18, 20) for fixing said solid chemical (8) substance inside the housing (2).

15. Generator according to any of the preceding claims, wherein the housing (2) comprises a safety valve.

16. Emergency oxygen supply device in an aircraft, said device comprising:
a plurality of chemical oxygen generators (1, 310) according to any of the preceding claims,
**characterized by** a control unit coupled to the starter units (42) of the generators (1, 310), wherein said control unit is adapted to simultaneously activate at least two starter units (42).

17. Device according to claim 16, wherein said control unit is adapted to control the starter units according to any of the following schemes:
- simultaneously activating all starter units (42),
- simultaneously activating a first subset of the plurality of starter units (42) and subsequently activating the starter units (42) of a second subset one after the other, wherein the first subset comprises at least two starter units (42)
- simultaneously activating a first subset of the plurality of starter units (42) and subsequently simultaneously activating a second subset (42) of the plurality of starter units (42) and subsequently activating the starter units (42) of a third subset one after the other, wherein the first subset and the second subset each comprises at least two starter units (42).

18. Device according to claim 10 or 11, wherein the plurality of the housings (2) of the generator (1, 310) is arranged inside a single emergency oxygen box.
